# EUROPÄISCHE PATENTSCHRIFT

(11) **EP 0 590 388 B1**
(45) Veröffentlichungstag und Bekanntmachung des Hinweises auf die Patenterteilung: **10.12.1997**
(21) Anmeldenummer: 93114572.6
(22) Anmeldetag: 10.09.1993
(51) Int. Cl.: B60R 16/02

(54) **Fahrzeug mit einem Fahrzeugcomputer für Messsignale aus einem Radbereich**
Vehicle with a computer for wheel measurement signals
Véhicule avec un ordinateur pour signaux de mesure en provenance d'une région des roues

(30) Priorität: 14.09.1992 DE 4230675
(43) Veröffentlichungstag der Anmeldung: 06.04.1994
(73) Patentinhaber: KNORR-BREMSE Systeme für Nutzfahrzeuge GmbH, 80809 München (DE)
(72) Erfinder: Baumgartner, Hans, D-85368 Moosburg (DE); Bieker, Dieter, D-81827 München (DE); Theiss, Armin, D-83607 Holzkirchen (DE)

(56) Entgegenhaltungen:
- EP-A- 0 051 849
- EP-A- 0 307 634
- EP-A- 0 328 437
- EP-A- 0 402 732
- DE-A- 3 841 654
- DE-U- 9 010 131

## Beschreibung

Die Erfindung bezieht sich auf ein Fahrzeug mit einem Fahrzeugcomputer, dem Meßsignale von wenigstens zwei unterschiedlichen, in einem Radbereich angeordneten Sensoren, gegebenenfalls Sensoren für die Drehbewegungen des Fahrzeugrades und/oder den Verschleißzustand von Bremsbelägen und/oder dem Verschleißzustand von Bremsscheibenflächen und/oder die Temperatur einer dem Fahrzeugrad zugeordneten Scheibenbremse, durch elektrische Signalleitungen zuführbar sind. Ein solches Fahrzeug ist beispielsweise aus EP-A-0 307 634 bekannt.

Es ist Aufgabe der Erfindung, ein derartig ausgestattetes Fahrzeug in einfacher Weise montage- und wartungsfreundlich auszugestalten.

Diese Aufgabe wird nach der Erfindung dadurch gelöst, daß alle von den Sensoren eines Radbereiches ausgehenden Abschnitte der Signalleitungen zu einer zumindest nahe des Radbereiches bzw. in diesem befindlichen Zentralsteckvorrichtung führen, wo sie lösbar mit weiteren Abschnitten der Signalleitungen verbunden sind, welche zum Fahrzeugcomputer führen.

Weitere, nach der Erfindung vorteilhafte Ausgestaltungsmöglichkeiten eines derart ausgebildeten Fahrzeuges sind den Unteransprüchen entnehmbar.

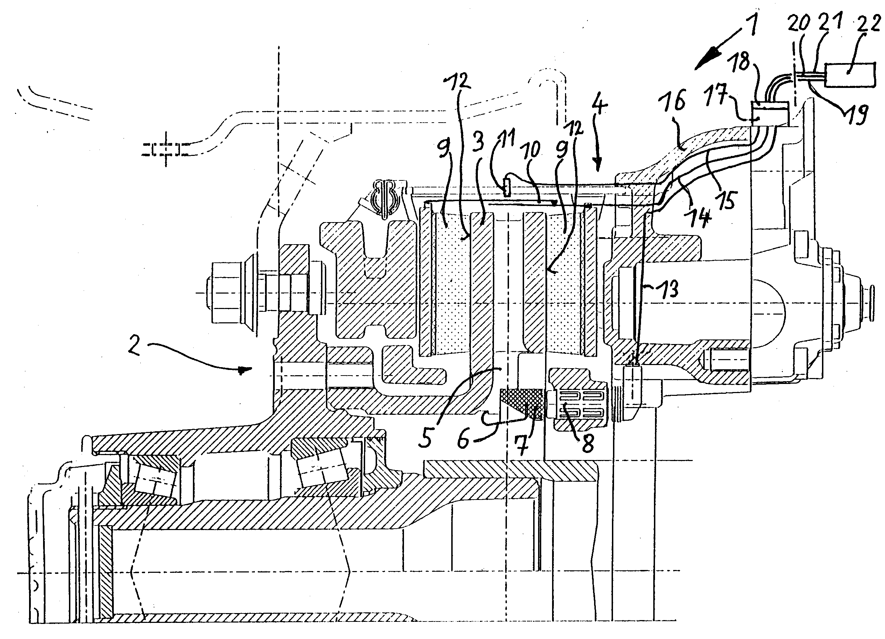

In der Zeichnung ist ein Ausführungsbeispiel für ein nach der Erfindung ausgestattetes Fahrzeug schematisch in seinen erfindungswesentlichen Teilen dargestellt.

In der Zeichnung ist ein Radbereich 1 eines Fahrzeuges dargestellt, dieser Radbereich 1 beinhaltet im wesentlichen ein Fahrzeugrad 2, welches mit einer innenbelüfteten Bremsscheibe 3 einer Scheibenbremse 4 verbunden ist. An die Tragspeichen 5 der in üblicher Weise ausgebildeten Bremsscheibe 3 ist vermittels einer Haltefeder 6 ein Impulsgeberring 7 angekuppelt, der von einem feststehenden Sensor 8 für die Drehbewegungen des Fahrzeugrades 2 vorzugweise magnetisch abtastbar ist. Der Verschleißzustand der Bremsbeläge 9 der Scheibenbremse 4 wird durch einen weiteren Sensor 10 abgetastet, dieser Sensor kann selbstverständlich auch in einer anderen, bekannten Bauart als in der Zeichnung angedeutet ausgeführt sein, insbesondere kann auch jeder der beiden Bremsbeläge 9 gesondert sensiert werden. Schließlich ist noch ein weiterer Sensor 11 für die Temperatur der Scheibenbremse vorgesehen, dieser Sensor kann wie dargestellt die Temperatur der aus der Bremsscheibe 3 austretenden Kühlluft sensieren, er kann jedoch auch anderer bekannter Bauart bzw. Anordnungsweise sein. Es können auch noch weitere, nicht dargestellte Sensoren für interessierende Meßgrößen, beispielsweise für den Verschleißzustand der Bremsscheibenflächen 12, an welchen die Bremsbeläge 9 zur reibenden Anlage gelangen, vorgesehen sein.

Von den Sensoren 8,10 und 11 und den gegebenenfalls weiteren, nicht dargestellten Sensoren führen Abschnitte 13,14 und 15 elektrischer Signalleitungen zu einem feststehenden Gehäuseteil 16 der Scheibenbremse 4, im Gehäuseteil 16 sind im wesentlichen Zuspann- und Nachstellvorrichtungen nicht dargestellter Art für die Scheibenbremse 4 untergebracht. Der Sensor 8 ist zweckmäßig an diesem Gehäuseteil 16 gehaltert. Die Abschnitte 13,14 und 15 führen zu einem am Gehäuseteil 16 gehalterten Zentralstecker 17, wo sie durch Einstecken eines entsprechenden Zentralstecker-Mutterteiles 18 mit weiteren Abschnitten 19,20 und 21 der Signalleitungen verbindbar sind. Der Zentralstecker 17 und das Zentralstecker-Mutterteil 18 bilden zusammen eine Zentralsteckvorrichtung, vermittels welcher die Abschnitte 13,14 und 15 mit den Abschnitten 19,20 und 21 der Signalleitungen leicht und sicher verbindbar und auch wieder lösbar sind. Die Abschnitte 19,20 und 21 führen zu einem am Fahrzeug in geeigneter Position angeordneten Fahrzeugcomputer 22, in welchem die von den Sensoren 8,10 und 11 sowie gegebenenfalls weiteren Sensoren zugeführten Sensorsignale ausgewertet und hinsichtlich beispielsweise einer ABS-Regelung für das Fahrzeugrad 2 sowie Warnanzeigen für die Verschleißzustände und die Temperatur der Scheibenbremse 4 verarbeitet werden. Der Fahrzeugcomputer 22 kann zusätzlich für weitere, nicht erwähnte Signalverarbeitungen- und Auswertungen vorgesehen sein.

Durch die Zentralsteckvorrichtung 17,18 ergibt sich eine einfache Anschlußmöglichkeit für im Radbereich 2 gegebenenfalls vorzumontierende Sensoren 8,10 und 11, zugleich ergibt sich die Möglichkeit, Prüfgeräte für diese Sensoren und/oder den Fahrzeugcomputer 22 in einfacher Weise anzuschließen.

Kurzfassung:
Von den in einem Radbereich (1) angeordneten Sensoren (8,10,11) führen Abschnitte (13,14,15) der von den Sensoren (8,10,11) ausgehenden Signalleitungen zu einer Zentralsteckvorrichtung (17,18), welche vorzugsweise an einem festehenden Gehäuseteil (16) einer Scheibenbremse (4) angeordnet ist. Von der Zentralsteckvorrichtung (17,18) führen weitere Abschnitte (19,20,21) der Signalleitungen zu einem Fahrzeugcomputer (22), in welchem die Sensorsignale ausgewertet und verarbeitet werden.

Durch die Zentralsteckvorrichtung (17,18) können im Radbereich (1) vormontierte Sensoren (8,10,11) in einfacher Weise an den Fahrzeugcomputer (22) angeschlossen werden, zudem können Prüfgeräte sowohl für die Sensoren (8,10,11) wie auch für den Fahrzeugcomputer (22) in einfacher Weise angeschlossen werden.

### Bezugszeichenliste

- 1: Radbereich
- 2: Fahrzeugrad
- 3: Bremsscheibe
- 4: Scheibenbremse
- 5: Tragspeiche
- 6: Haltefeder
- 7: Impulsgeberring
- 8: Sensor
- 9: Bremsbelag
- 10: Sensor
- 11: Sensor
- 12: Bremsscheibenfläche
- 13: Abschnitte
- 14: Abschnitte
- 15: Abschnitte
- 16: Gehäuseteil
- 17: Zentralstecker
- 18: Zentralstecker-Mutterteil
- 19: Abschnitt
- 20: Abschnitt
- 21: Abschnitt
- 22: Fahrzeugcomputer

## Patentansprüche

1. Fahrzeug mit einem Fahrzeugcomputer (22), dem Meßsignale von wenigstens zwei unterschiedlichen, in einem Radbereich (1) angeordneten Sensoren (8,10,11), gegebenenfalls Sensoren für die Drehbewegungen des Fahrzeugrades (2) und/oder den Verschleißzustand von Bremsbelägen (9) und/oder den Verschleißzustand von Bremsscheibenflächen (12) und/oder die Temperatur einer dem Fahrzeugrad zugeordneten Scheibenbremse (4), durch elektrische Signalleitungen zuführbar sind, dadurch gekennzeichnet, daß alle von den Sensoren (8,10,11) eines Radbereiches (1) ausgehenden Abschnitte (13,14,15) der Signalleitungen zu einer zumindest nahe des Radbereiches (1) bzw. in diesem befindlichen Zentralsteckvorrichtung (17,18) führen, wo sie lösbar mit weiteren Abschnitten (19,20,21) der Signalleitungen verbunden sind, welche zum Fahrzeugcomputer (22) führen.

2. Fahrzeug nach Anspruch 1, dadurch gekennzeichnet, daß die Zentralsteckvorrichtung (17,18) fahrzeugradseitig einen Zentralstecker (17) aufweist.

3. Fahrzeug nach Anspruch 2, mit einer dem Fahrzeugrad (2) zugeordneten Scheibenbremse (4), dadurch gekennzeichnet, daß ein Sensor (8) für die Drehbewegungen des Rades (2) sich im Bereich der Scheibenbremse (4) nahe eines an deren Bremsscheibe (3) befindlichen Impulsgeberringes (7) und/oder ein Sensor (11) für die Temperatur der Scheibenbremse (4) an deren Kühlluftstrom-Austritt und/oder ein Sensor (10) für den Verschleißzustand der Bremsbeläge (9) in oder an diesen befindet und daß sich der Zentralstecker (17) an einem drehfest gehaltenen Teil der Scheibenbremse (4), insbesondere einem Sattelführungs- oder einem Gehäuseteil (16), befindet.

## Claims

1. Vehicle including a vehicle computer (22) which may be supplied with measuring signals from at least two different sensors (8, 10, 11) disposed in a wheel region (1), possibly sensors detecting the rotational movements of the vehicle wheel (2) and/or the wear condition of brake friction linings (9) and/or the wear condition of brake disc surfaces (12) and/or the temperature of a disc brake (4) associated with said vehicle wheel, via electrical signaling lines, **characterised in** that all segments (13, 14, 15) of said signalling lines, which originate from said sensors (8, 10, 11) of a wheel region (1), extend to a central coupler means provided at least in the vicinity of or in said wheel region (1) where they are detachably connected to other segments (19, 20, 21) of said signaling lines leading to said vehicle computer (22).

2. Vehicle according to Claim 1, **characterised in** that said central coupler means (17, 18) includes a central coupler (17) on the side of the vehicle wheel.

3. Vehicle according to Claim 2, including a disc brake (4) associated with said vehicle wheel (2), **characterised** in that a sensor (8) detecting the rotational movements of said wheel (2) is provided in the region of said disc brake (4) in the vicinity of a pulse-generating ring (7) located on the brake disc (3) thereof, and/or a sensor (11) detecting the temperature of said disc brake (4) is provided at the point where the cooling-air stream is discharged, and/or a sensor (10) is provided for detecting the wear condition of said friction linings (9) in or on these linings, and that said central coupler (17) is provided on a portion of said disc brake (4), which is held in a way to prevent rotation thereof, particularly at a caliper guide or a housing part (16).

## Revendications

1. Véhicule comprenant un ordinateur de véhicule (22) approprié à être alimenté en signaux de mesure en provenance d'au moins deux détecteurs différents (8, 10, 11) disposés dans une région de la roue (1), éventuellement des détecteurs qui établissent les mouvements rotatoires de la roue (2) du véhicule et/ou l'état d'usure des garnitures de frein (9) et/ou l'état d'usure des surfaces (12) des disques à frein et/ou la température d'un frein à disque (4) correspondant à ladite roue du véhicule, moyennant des fils de signaux électriques, **caractérisé en ce** que toutes les sections (13, 14, 15) desdits fils de signaux, en provenance desdits détecteurs d'une région de la roue (1), s'étendent à un dispositif connecteur central qui est prévu au moins à proximité de ou dans ladite région de la roue (1), où il est raccordé, de façon mobile, à des autres sections (19, 20, 21) desdits fils de signaux, qui s'étendent audit ordinateur de véhicule (22).

2. Véhicule selon la revendication 1, **caractérisé en ce** que ledit dispositif connecteur central (17, 18) comprend un connecteur central (17) du côté de la roue du véhicule.

3. Véhicule selon la revendication 2, comprenant un frein à disque (4) correspondant à ladite roue du véhicule (2), **caractérisé en ce** qu'un détecteur (8) est prévu, à établir les mouvements rotatoires de ladite roue (2), dans la région de ladite disque à frein (4), à proximité d'un anneau générateur d'impulsions (7) qui se trouve sur la disque à frein (3) du frein, et/ou un détecteur (11) à établir la température de ladite frein à disque (4) est prévu au point de décharge du courant de l'air refroidissant, et/ou un détecteur (10) est prévu à établir l'état d'usure desdites garnitures de frein (9), dans ou sur ces garnitures, et en ce que ledit dispositif connecteur central (17) est disposé sur une partie dudit frein à disque (4), qui est tenue de façon à empêcher sa rotation, en particulier à une partie guide-étrier ou une partie du carter (16).
